# EUROPEAN PATENT APPLICATION

(11) **EP 2 018 061 A1**
(43) Date of publication of application: **21.01.2009**
(21) Application number: 07740894.6
(22) Date of filing: 03.04.2007
(51) Int. Cl.: H04N 7/173, H04N 5/44

(54) **DATA TRANSMITTING DEVICE, DATA TRANSMITTING METHOD, AUDIOVISUAL ENVIRONMENT CONTROL DEVICE, AUDIOVISUAL ENVIRONMENT CONTROL SYSTEM AND AUDIOVISUAL ENVIRONMENT CONTROL METHOD**

(30) Priority: 19.04.2006 JP 2006115099
(71) Applicant: Sharp Kabushiki Kaisha, Osaka-shi, Osaka 545-8522 (JP)
(72) Inventor: IWANAMI, Takuya, Chiba-shi, Chiba 266-0011 (JP); YAMAMOTO, Kenichiroh, Chiba-shi, Chiba 266-0005 (JP); YOSHIDA, Yasuhiro, Nara 631-0837 (JP); YOSHII, Takashi, Chiba-shi, Chiba 261-0001 (JP)
(74) Representative: Müller - Hoffmann & Partner
(86) International application number: PCT/JP2007/057458
(87) International publication number: WO 2007/122987

(57) **Abstract**

An audio-visual environment control system is provided with a function to control illumination for optimum audio-visual environment in accordance with a scene situation of an displayed image. A data transmission device is comprised of a data multiplexing portion for multiplexing scene situation data indicating scene setting situations of each scene of image data, and a transmitting portion for modulating and transmitting the image data in which the scene situation data are multiplexed. A data receiving apparatus is comprised of a data separating portion 22 for separating the scene situation data from the received image data, a CPU 23 for controlling illumination light of an illuminating device 27 in accordance with the scene situation data, and an illumination control data generating portion 24.

## Description

### TECHNICAL FIELD

The present invention relates to a data transmission device, a data transmission method, an audio-visual environment control device, an audio-visual environment control system, and an audio-visual environment control method that when an image is displayed on an image display device, can control illuminating light around the image display device by adapting illuminating light to the atmosphere and scene setting of a shooting scene of the image.

### BACKGROUND OF THE INVENTION

Techniques have been known that offer an audio-visual staging effect as to enhancing a scene of presence by adjusting illuminating light around the display device and projector to a displayed image, for example, when an image is displayed by an image display device, such as a television set, or an image is displayed by projecting using a projector.

For example, Japanese Laid-Open Patent Publication No. 02-158094 discloses light color variable illuminating apparatus that calculates a light-mixing illuminance ratio of three primary colors of a light source for each frame from a color signal (RGB) and a luminance signal (Y) of a displayed image on a color TV, and carries out light control by linking with the image. The light color variable illuminating apparatus extracts the color signal (RGB) and luminance signal (Y) from the display image on the color TV, calculates a proper light control illuminance ratio of trichromatic light (red light, green light, blue light) used for the light source from the color signal and luminance signal, determines the illuminance of trichromatic light according to the calculated illuminance ratio, mixes trichromatic light, and outputs it as illuminating light.

. In another example, Japanese Laid-Open Patent Publication No. 02-253503 discloses an image staging illuminating apparatus that divides a TV image into a plurality of portions, and controls illumination around a divided portion by detecting the average hue of the divided portion. The image staging illuminating apparatus has an illuminating means that illuminates the periphery of a place where a color TV is located, divides an image displayed on the color TV into a plurality of portions, detects the average hue of a divided portion of an image corresponding to a portion illuminated by the illuminating means, and controls the illuminating means based on the detected hue.

In still another example, Japanese Laid-Open Patent Publication No. 03-184203 discloses a method which controls illumination so that the chromaticity and luminance of the wall behind the image display device becomes identical with the average chromaticity and average luminance of a whole screen or a background other than the skin-colored portion, which is the remaining image that pixels representing skin colored portions, such as a person's face, are excluded from an image displayed on the screen of the image display device, not by obtaining the average chromaticity and average luminance of the whole screen of an image display device, but by obtaining the average chromaticity and average luminance of the background extracting only the RGB signals and luminance signals of pixels of the background.

### DISCLOSURE OF THE INVENTION

### PROBLEMS TO BE SOLVED BY THE INVENTION

Usually, a scene of image is created as a sequence of image based on a series of scene settings in accordance with the intention of image producers (such as a scenario writer and a director), for example. Therefore, to enhance the feeling of being at a live performance and atmosphere at the time of viewing image, it is desirable to emit illumination light into a viewing space in accordance with a scene situation of the displayed image (scene setting situation of a story).

The above described conventional audio-visual environment control device detects the characteristic quantity (color signal and luminance signal) for every frame (screen) of an image signal to be displayed, and controls illuminating light. Because of this, generation of illuminating light adapted to the condition of an image scene may become difficult, depending on the contents of a displayed image. For example, illuminating light of an improper color may be emitted on the periphery of a subject due to the effect of clothes the subject person wearing or of an artificial thing at the background of the subject. This makes impossible reproduction of the atmosphere of each scene or maintenance of a feeling of being at a live performance in each scene.

That is, although illumination at the time of the shooting based on the scene setting is generally characterized for each scene, audio-visual environment illumination considerably departing from characteristics of the scene adversely impairs the feeling of being at a live performance.

In the conventional technologies, the state of illumination light is varied depending on frame-by-frame changes in the luminance and the hue of image signals and, especially, in such a case that the degrees of changes in the luminance and the hue between frames are high, the illumination light is roughly varied and it is problematic that a viewer feels unpleasant due to flickers. The fluctuation of the illumination light depending on the frame-by-frame changes in the luminance and the hue during display of one scene having no change in the scene setting spoils the atmosphere of the scene by contraries and is not desirable.

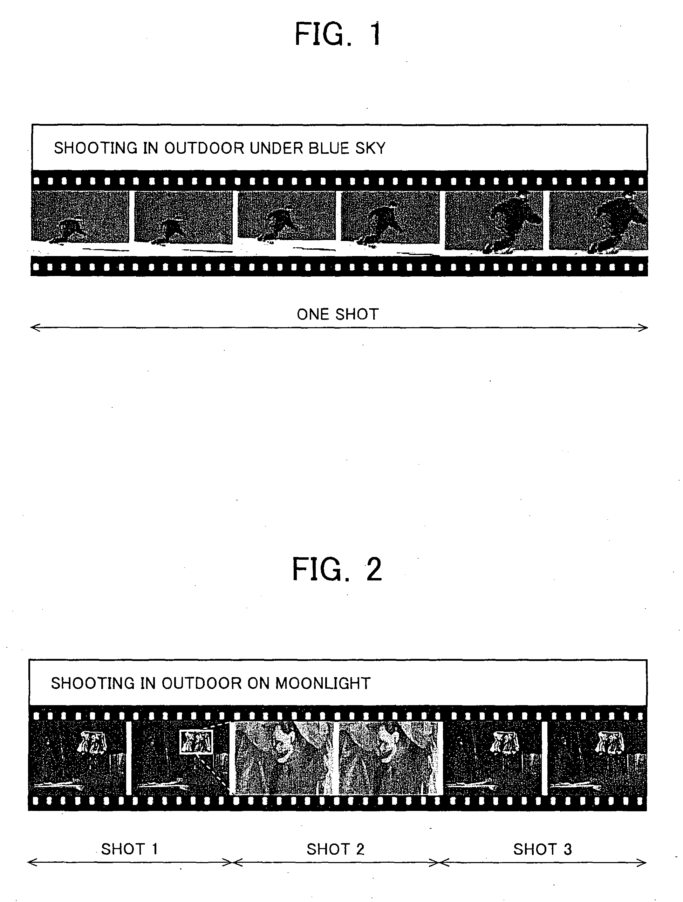

Fig. 1 is an explanatory view of an example of a problem of illumination control that is carried out according to the above conventional technique and shows some of a series of dynamic images. Fig. 1 depicts an image scene that is shot according to a shooting condition that is an outdoor under daylight in a sunny day. This scene consists of images that are taken by a series of camerawork with no switching of a camera. In this scene, images of a skier who is gliding down a slope toward the vicinity of the camera are taken. The skier's wear is red, and the sky is blue.

In the image scene, an area of a blue sky as a background is large in initial frames, and an area of the skier's red wear gradually grows bigger as the skier glides down a slope to approach the camera. In other words, the ratio of colors making up each frame changes as image frames proceed in the scene.

In such a case, if the illumination light is controlled using the chromaticity and luminance of each frame, the illumination light is changed from bluish light to reddish light. That is, regardless of a series of scene situations under the sunlight of clear sky in the daytime, the illumination light is generated/applied without considering the scene situations and, therefore, the atmosphere of the scene is spoiled by contraries and a viewer feels unpleasant. If the color of the illumination light is changed in a sequence of scene with a single continuous scene setting (atmosphere), the atmosphere of the scene is also spoiled and a viewer feels unpleasant.

Fig. 2 is an explanatory view of another example of a problem of illumination control that is carried out according to the above conventional technique. Fig. 2 depicts an image scene that is shot according to a shooting condition that is an outdoor in moonlight night. This scene consists of three shots (1, 2, 3) where different types of camerawork are performed. In the shot 1, an image of a ghost is taken by long shooting by a camera. In the shot 2, an image of the ghost is taken by a close-up shooting. In the shot 3, the camera returns to the camera position in the shot 1. These shots are taken by different types of camerawork, but are intended to make up a single segment of scene in which one atmosphere continues.

In such a case, relatively dark images at the moonlight night are continued in the shot 1. If the illumination light is controlled in accordance with the luminance and chromaticity of each frame of these images, the illumination light becomes relatively dark. When the shot 1 is switched to the shot 2, the ghost shot in close-up comes to be a relatively bright image. If the illumination light is controlled for each frame by the conventional techniques, the control of the illumination light is considerably changed when the shots are switched and the bright illumination light is generated. When switching to the shot 3, the illumination light returns to the dark light similar to that for the shot 1.

That is, regardless of a series of scene situations under the illumination of moonlight late at night in a samurai drama, the illumination light is generated/applied without considering the scene situations and, therefore, the atmosphere of the scene is spoiled by contraries and a viewer feels unpleasant. If the illumination light becomes dark and bright in a sequence of scene with a single continuous scene setting (atmosphere), the atmosphere of the scene is also spoiled and a viewer feels unpleasant.

The present invention was conceived in view of the above problems and it is therefore the object of the present invention to provide a data transmission device, a data transmission method, an audio-visual environment control device, an audio-visual environment control system, and an audio-visual environment control method capable of implementing the optimum illumination control in an audio-visual environment depending on scene situations of displayed image.

### MEANS FOR SOLVING THE PROBLEMS

A first invention of the present application is a data transmission device for transmitting image data composed of one or more scenes, wherein the scene situation data indicative of scene setting situations of each of scenes of the image data is added to the image data and transmitted.

A second invention of the present application is the data transmission device, wherein the scene situation data is added to the image data scene by scene.

A third invention of the present application is the data transmission device, wherein the scene situation data is added to the image data shot by shot.

A fourth invention of the present application is the data transmission device, wherein the scene situation data is added to the image data frame by frame.

A fifth invention of the present application is the data transmission device, wherein the scene situation data at least contains data indicating seasons (set) in stories of scenes.

A sixth invention of the present application is the data transmission device, wherein the scene situation data at least contains data indicating clock times (set) in stories of scenes.

A seventh invention of the present application is the data transmission device, wherein the scene situation data at least contains data indicating places (set) in stories of scenes.

An eighth invention of the present application is the data transmission device, wherein the scene situation data at least contains data indicating periods (set) in stories of scenes.

A ninth invention of the present application is the data transmission device, wherein the scene situation data at least contains data indicating weathers (set) in stories of scenes.

A tenth invention of the present application is the data transmission device, wherein the scene situation data at least contains data indicating regions (set) in stories of scenes.

An eleventh invention of the present application is a data transmission device that transmits scene situation data indicating scene setting situations of each of scenes comprising image data on the reception of a transmission request from outside, wherein the scene situation data is transmitted together with data indicating a timing of start of each of scenes comprising the image data.

A twelfth invention of the present application is the data transmission device, wherein the scene situation data at least contains data indicating seasons (set) in stories of scenes.

A thirteenth invention of the present application is the data transmission device, wherein the scene situation data at least contains data indicating clock times (set) in stories of scenes.

A fourteenth invention of the present application is the data transmission device, wherein the scene situation data at least contains data indicating places (set) in stories of scenes.

A fifteenth invention of the present application is the data transmission device, wherein the scene situation data at least contains data indicating periods (set) in stories of scenes.

A sixteenth invention of the present application is the data transmission device, wherein the scene situation data at least contains data indicating weathers (set) in stories of scenes.

A seventeenth invention of the present application is the data transmission device, wherein the scene situation data at least contains data indicating regions (set) in stories of scenes.

An eighteenth invention of the present application is an audio-visual environment control device comprising: a receiving means that receives image data to be displayed on a display device and scene situation data indicating scene setting situations of each of scenes comprising the image data; and a control means that controls illuminating light from an illuminating device arranged around the display device, based on the scene situation data.

A nineteenth invention of the present application is the audio-visual environment control device, wherein the control means controls illuminating light from the illuminating device by switching illuminating light scene by scene in the image data.

A twentieth invention of the present application is the audio-visual environment control device, wherein the control means controls illuminating light from the illuminating device using also a characteristic quantity of the image data, in addition to the scene situation data.

A twenty-first invention of the present application is the audio-visual environment control device, wherein the scene situation data at least contains data indicating seasons (set) in stories of scenes.

A twenty-second invention of the present application is the audio-visual environment control device, wherein the scene situation data at least contains data indicating clock times (set) in stories of scenes.

A twenty-third invention of the present application is the audio-visual environment control device, wherein the scene situation data at least contains data indicating places (set) in stories of scenes.

A twenty-fourth invention of the present application is the audio-visual environment control device, wherein the scene situation data at least contains data indicating periods (set) in stories of scenes.

A twenty-fifth invention of the present application is the audio-visual environment control device, wherein the scene situation data at least contains data indicating weathers (set) in stories of scenes.

A twenty-sixth invention of the present application is the audio-visual environment control device, wherein the scene situation data at least contains data indicating regions (set) in stories of scenes.

A twenty-seventh invention of the present application is an audio-visual environment control system comprising the audio-visual environment control device, and an illuminating device that is controlled by the audio-visual environment control device in emission of audio-visual environment illuminating light.

A twenty-eighth invention of the present application is a data transmission method for transmitting image data composed of one or more scenes, wherein scene situation data indicating scene setting situations of each of scenes of the image data is added to the image data and transmitted.

A twenty-ninth invention of the present application is a data transmission method for transmitting scene situation data indicating scene setting situations of each of scenes comprising image data on the reception of a request from outside, wherein the scene situation data is transmitted together with data indicating a timing to start of each of scenes comprising the image data.

A thirtieth invention of the present application is an audio-visual environment control method that receives image data to be displayed on a display device and scene situation data indicating scene setting situations of each of scenes comprising the image data and controls illuminating light from an illuminating device disposed around the display device based on the scene situation data.

### EFFECT OF THE INVENTION

According to the present invention, the optimum audio-visual environment is realized depending on image scene situations.

### BRIEF DESCRIPTION OF DRAWINGS

[Fig. 1] Fig. 1 is a view for explaining an example of the problem of the illumination fluctuation due to the conventional techniques.
[Fig. 2] Fig. 2 is a view for explaining another example of the problem of the illumination fluctuation due to the conventional techniques.
[Fig. 3] Fig. 3 is a block diagram of a schematic configuration of the essential parts of an image transmitting device in an audio-visual environment control system according to a first embodiment of the present invention.
[Fig. 4] Fig. 4 is an explanatory view of an example of an output bit stream of the image transmitting device in the audio-visual environment control system according to the first embodiment of the present invention.
[Fig. 5] Fig. 5 is an explanatory view of an example of scene situation data in the audio-visual environment control system according to the first embodiment of the present invention.
[Fig. 6] Fig. 6 is an explanatory view of the constituent parts of an image.
[Fig. 7] Fig. 7 is a block diagram of a schematic configuration of the essential parts of an image receiving apparatus in the audio-visual environment control system according to the first embodiment of the present invention.
[Fig. 8] Fig. 8 is an explanatory view of an example of control data in the audio-visual environment control system according to the first embodiment of the present invention.
[Fig. 9] Fig. 9 is an explanatory view of a color reproduction range of illumination light in the audio-visual environment control system according to the first embodiment of the present invention.
[Fig. 10] Fig. 10 is an explanatory view of a relation between the scene situation data and the control data in the audio-visual environment control system according to the first embodiment of the present invention.
[Fig. 11] Fig. 11 is a view for explaining a part of the processing flow for generating the control data in the audio-visual environment control system according to the first embodiment of the present invention.
[Fig. 12] Fig. 12 is an explanatory view of the rest of the processing flow shown in Fig. 11.
[Fig. 13] Fig. 13 is a block diagram of a schematic configuration of the essential parts of an image receiving apparatus in an audio-visual environment control system according to a second embodiment of the present invention.
[Fig. 14] Fig. 14 is a block diagram of an illumination control data generating portion of Fig. 13.
[Fig. 15] Fig. 15 is an explanatory view of a color reproduction range of illumination light in the audio-visual environment control system according to the second embodiment of the present invention.
[Fig. 16] Fig. 16 is a block diagram of a schematic configuration of the essential parts of an external server device in an audio-visual environment control system according to a third embodiment of the present invention.
[Fig. 17] Fig. 17 is an explanatory view of an example of a scene situation data storage table in the audio-visual environment control system according to the third embodiment of the present invention.
[Fig. 18] Fig. 18 is a block diagram of a schematic configuration of the essential parts of an image receiving apparatus in the audio-visual environment control system according to the third embodiment of the present invention.
[Fig. 19] Fig. 19 is a block diagram of a schematic configuration of the essential parts of an image transmitting device in an audio-visual environment control system according to a fourth embodiment of the present invention.
[Fig. 20] Fig. 20 is a block diagram of an illumination control data generating portion of Fig. 19.

### PREFERRED EMBODIMENTS OF THE INVENTION

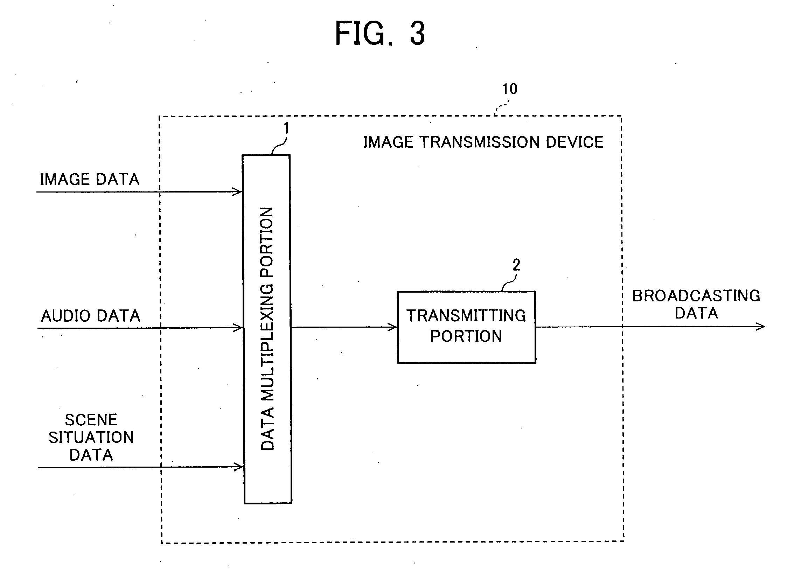

Fig. 3 is a view of a schematic configuration of the essential parts of an image transmitting device (data transmission device) used in an audio-visual environment control system in a first embodiment of the present invention. As shown in Fig. 3, the image transmission device 10 of the first embodiment includes a data multiplexing portion 1 that multiplexes image data, audio data, and scene situation data supplied as additional data by dividing each of them in a transport stream packet (TSP) format, and a transmitting portion 2 that modulates output data from the data multiplexing portion 1 after adding an error correction code, etc., to the output data and sends the modulated data to a transmission path as broadcasting data.

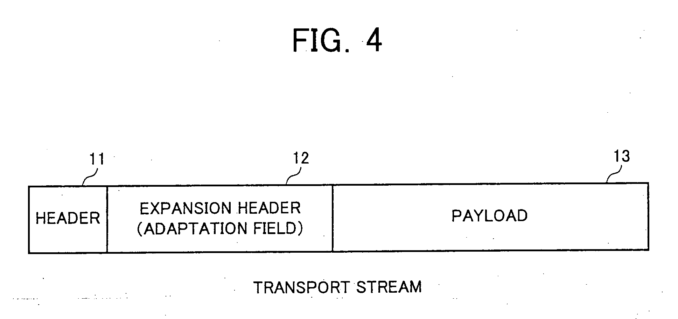

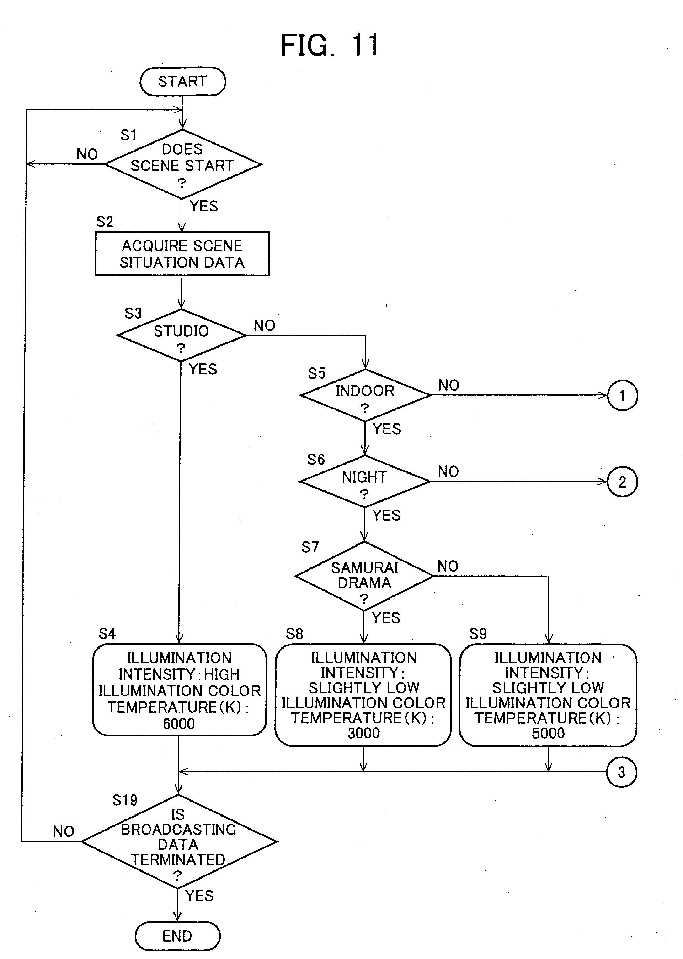

Fig. 4 is an explanatory view of a schematic configuration of a transport stream packet (TSP) that is a packet format standardized by MPEG2 (Moving Picture Experts Group 2) Systems. In Fig. 4, 11 denotes a header containing the description of data specified by MPEG2 including the data contents of the TPS, 12 denotes an extension header (adaptation field) allowed to contain the description of data determined by a data sender, and 13 denotes a payload composed of image data, audio data, etc. In the present embodiment, for example, the transport stream packet is configured so that image data and audio data are transmitted in the portion of the payload 13 and scene situation data, etc., as additional data is transmitted in the portion of the extension header (adaptation field) 12. Image data, audio data, and scene situation data may be transmitted in the form of different data streams by data multiplexing.

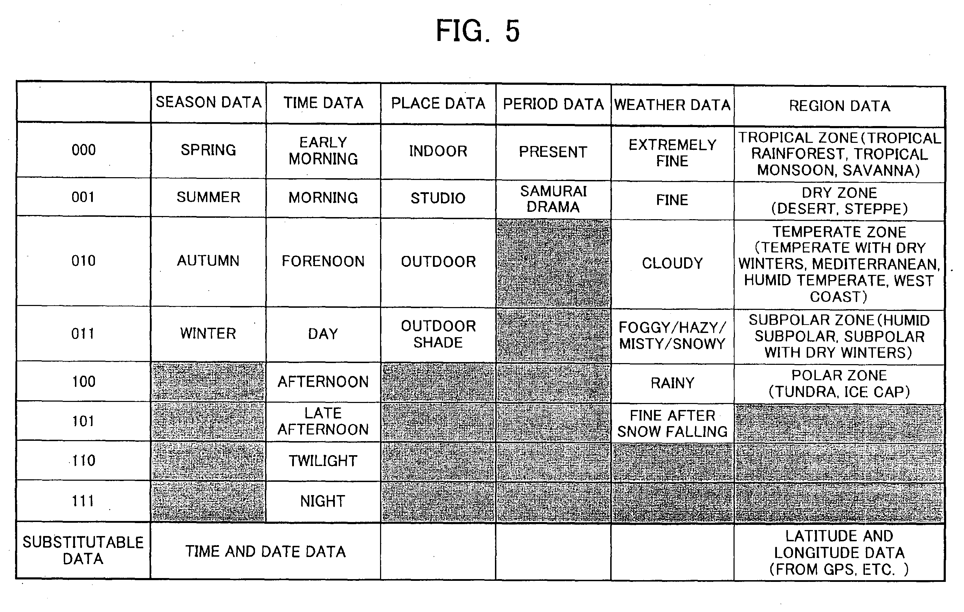

The scene situation data indicating the scene setting situation of each scene of image data will be described in detail with reference to Fig. 5. The scene situation data of this embodiment include season data representing seasons in stories of scenes, time data representing times in stories of scenes, place data representing places in stories of scenes, period data representing periods in stories of scenes, weather data representing weathers in stories of scenes, and region data representing regions in stories of scenes. All of these pieces of data enable estimation of characteristic illumination environments related to the scene settings of the scenes and are useful data for producing the atmosphere and the feeling of being at a live performance of the scenes with illumination light.

Since the intensity and the color temperature of natural light (sunlight) vary depending on the seasons, the feeling of being at a live performance for outdoor scenes is improved by controlling audio-visual environment illumination (described later) to adapt it to the season in the story. That is, for example, although the color temperature of the sunlight in the daytime in spring, summer, and autumn is about 6000 K, the color temperature of the sunlight in winter may be increased to about 7000 K to represent coldness even in the daytime. The intensity of the sunlight is high in summer, slightly high in spring/autumn, and moderate in winter. Therefore, in this embodiment, the scene situation data include the season data that is the information expressed in two bits indicating which season the scene setting of each image scene belongs to, spring, summer, autumn, or winter.

Since the intensity and the color temperature of natural light (sunlight) also vary depending on the time of day, the feeling of being at a live performance for outdoor scenes is improved by controlling the audio-visual environment illumination (described later) to adapt it to the clock times in the story. That is, for example, the color temperatures of the sunlight are about 2000 K in the early morning, about 3000 K in the morning, about 5000 K in the forenoon, about 6000 K at noon, about 5000 K in the afternoon, about 3000 K in the late afternoon, about 4000 K in the twilight, and about 7000 K in the night. The intensity of the sunlight is slightly low in the early morning, moderate in the morning, slightly high in the forenoon, high at noon, slightly high in the afternoon, moderate in the late afternoon, slightly low in the twilight, and very low in the night. Therefore, in this embodiment, the scene situation data include the time data that is the information expressed in three bits indicating when the scene setting of each image scene is, early morning, morning, before noon, noon, afternoon, evening, dusk, or night.

Since the intensity and the color temperature of natural light and artificial light vary depending on places, the feeling of being at a live performance for indoor/outdoor scenes is improved by controlling the audio-visual environment illumination (described later) to adapt it to the place in the story. That is, for example, although only slightly low intensity light of moonlight and street light generally exists outdoors in the night, slightly high intensity light exists indoors even in the night since indoor illumination is turned on. The intensity of illumination light of studios is high day and night and the light intensity becomes moderate in the shade even in the daytime. Therefore, in this embodiment, the scene situation data include the place data that is the information expressed in two bits indicating to which place the scene setting of each image scene belongs to, indoors, studio, outdoors, or shade. Although indoor places where the natural light comes through windows, etc., are considered here, indoor places shielded from the natural light may separately be added.

Since the intensity and the color temperature of natural light and artificial light vary depending on a period, the feeling of being at a live performance for contemporary/samurai drama scenes is improved by controlling the audio-visual environment illumination (described later) to adapt it to the period in the story. That is, for example, the color temperatures of the illuminating devices generally used in contemporary dramas are about 5000 K for fluorescent lamps (daylight white color), about 6700 K for fluorescent lamps (daylight color), and about 2800 K for incandescent lamps. On the other hand, the color temperature is about 1800 to 2500 K in the case of candle light frequently used for light sources at night in samurai dramas. The illumination intensity tends to be high in contemporary dramas and low in samurai dramas. Therefore, in this embodiment, the scene situation data include the period data that is the information expressed in one bit indicating which period the period setting of each image scene belongs to, contemporary or samurai drama.

Since the intensity and the color temperature of natural light (sunlight) vary depending on weathers, the feeling of being at a live performance for outdoor scenes is improved by controlling the audio-visual environment illumination (described later) to adapt it to the weather in the story. That is, for example, the color temperatures of daylight are about 6000 K in fine weather, 8000 to 9000 K in rainy weather, and about 6500 to 8000 K in cloudy weather. The intensity of natural light is maximum in extremely fine weather and decreases in the order of fine (after snow), fine, cloudy, foggy, hazy, misty, thundery, and rainy weather. Therefore, in this embodiment, the scene situation data include the weather data that is the information expressed in three bits indicating what weather the weather setting of each image scene belongs to, extremely fine, fine, cloudy, foggy, hazy, misty, thundery, rainy or fine after snow.

Since the intensity and the color temperature of natural light (sunlight) vary depending on regions, the feeling of being at a live performance for outdoor scenes is improved by controlling the audio-visual environment illumination (described later) to adapt it to the region in the story. That is, for example, the color temperatures of sunlight are about 5000 K in the tropical zone (daytime), about 7000 K in the polar zone (daytime), and about 6000 K in the dry, temperate, and subpolar zones (daytime). The intensity of sunlight tends to be very high in the tropical zone and reduces in the order of the zone such as the dry zone, the temperate zone, the subpolar zone, and the polar zone. Therefore, in this embodiment, the scene situation data include the weather data that is the information expressed in three bits indicating which zone the region setting of each image scene belongs to, tropical zone, dry zone, temperate zone, subpolar zone, or polar zone.

Various pieces of data included in the scene situation data are not limited to the data described above. For example, the scene situation data may include the season data and the time data as the time and date data indicating dates and times set in the story of each scene, the period data may be included in the scene situation data as the period data indicating the age set in the story of each scene, and the region data may be included in the scene situation data as the latitude and longitude data indicating latitude and longitude set in the story of each scene.

Since the above scene situation data may be generated using the scene setting situation data in scenario data at the time of image shooting, the work for newly generating the scene situation data may be eliminated. The various pieces of data in the above scene situation data may also be used as the scene setting situation data in the scenario data included in broadcasting data as the program additional data, or as the scene setting situation data prepared for editing or retrieval.

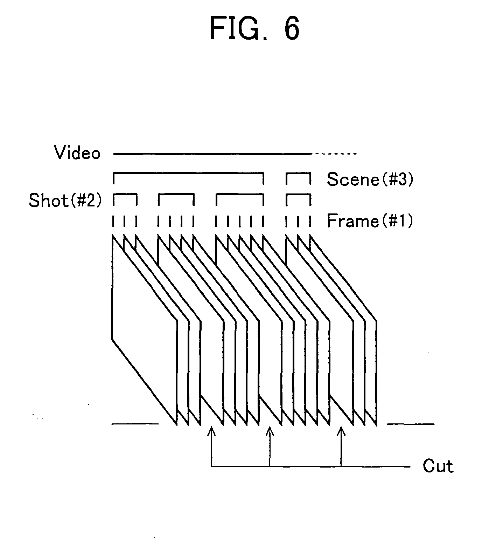

A configuration of image including scenes and shots will then be described with reference to Fig. 6. Image data including continuous dynamic images may be considered by dividing into three layers as shown in Fig. 6. A first layer (#1) composing image (video) is a frame. The frame is a physical layer and indicates a single two-dimensional image. The frame is usually obtained at the rate of 30 frames per second. A second layer (#2) is a shot. The shot is a frame sequence shot by a single camera. A third layer (#3) is a scene. The scene is a shot sequence having connections to compose a story.

The above scene situation data may be added to each frame, each shot, or each scene of image data. Although the control of the audio-visual environment illumination (described later) may effectively be realized by adding the scene situation data at least to each scene, the audio-visual environment illumination may more finely be controlled by adding the scene situation data to each frame. For example, the scene situation data may be added to specific frames (such as scene switching frames) in accordance with the intention of image producers (such as a scenario writer and a director).

For example, even if the same scene includes indoor shots and outdoor shots, the suitable audio-visual environment illumination control may be realized by adding the scene situation data at least to each shot. In other cases, the scene situation data may be added in each of GOPs (Group of Picture) , which is a unit of random access to image data.

Description will then be made of an image receiving apparatus (data receiving apparatus) that receives broadcasting data sent from the image transmitting device to display/reproduce image/audio and controls the audio-visual environment illumination upon displaying and reproducing the image and audio.

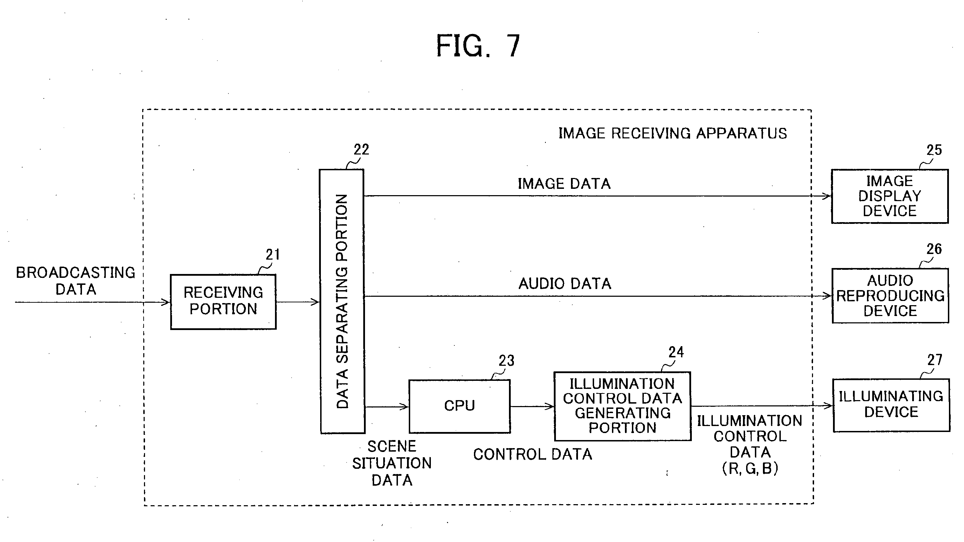

Fig. 7 is a view of an schematic configuration for explaining an example of an image receiving apparatus in the embodiment of the present invention. The image receiving apparatus includes a receiving portion 21 that receives, demodulates broadcasting data input from a transmission channel and performs error correction; a data separating portion 22 that separates/extracts the image data output to an image display device 25, the audio data output to an audio reproducing device 26, and the scene situation data as additional data from the output data of the receiving portion 21; a CPU 23 that outputs control data for the illumination adapted to scene settings (atmospheres) of scenes making up the image data in accordance with the scene situation data separated by the data separating portion 22; and an illumination control data generating portion 24 - that outputs the illumination control data (RGB data) corresponding to the output control data from the CPU 23 to an illuminating device 27 for illuminating the audio-visual environment space.

The illuminating devices 27 are arranged around the image display device 25, and are composed of LEDs that emit light having a given hue, e.g., light having three primary colors of red, green, and blue. The illuminating devices 27 are required only to have a structure to be able to control the illumination and brightness of the ambient environment of the image display device 25, and may be composed of a white LED and a color filter, a combination of a white electric lamp or fluorescent lamp and a color filter, or a color lamp, etc., not limited to a combination of LEDs emitting a given color, as described above. Arrangement of one or more illuminating devices 27 is sufficient.

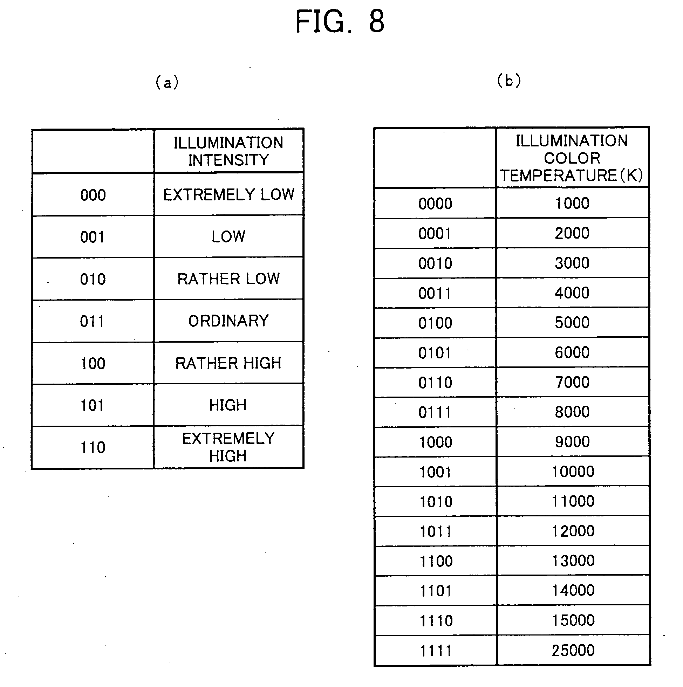

The CPU 23 determines the intensity and color temperature (a point on a blackbody locus) of illuminating light and outputs the determined intensity and color temperature to the illumination control data generating portion 24 as control data to reproduce the setting situation (atmosphere) in the story of each scene from the scene situation data described in Fig. 5 using audio-visual environment illumination by the illuminating devices 27. In the present embodiment, based on various types of data contained in the scene situation data, the CPU 23 generates, for example, control data expressing illumination intensities of 7 levels, as shown in Fig. 8(a), and illumination color temperatures of 16 levels, as shown in Fig. 8(b).

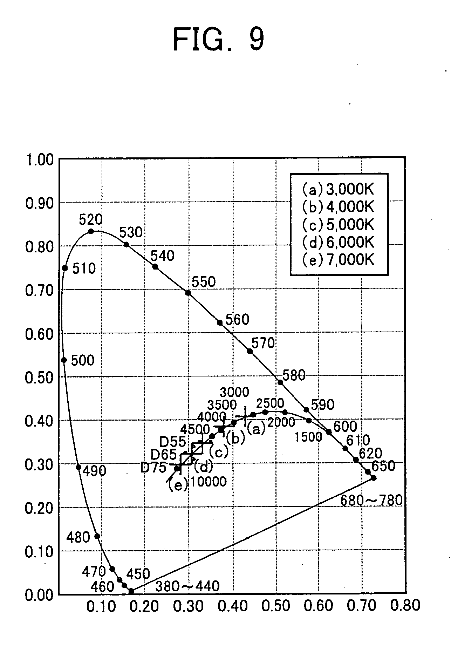

A blackbody is an ideal body that absorbs energy completely. Light emitted from the blackbody changes in color from red to yellow to white as the temperature of the blackbody increases. The temperature of the blackbody expressed in Kelvin temperature scale is referred to as color temperature. The color temperature and a color locus (blackbody locus) are plotted on an xy chromaticity graph, as shown in Fig. 9. When the color of a light source is not on the blackbody locus, the temperature of the blackbody that does not completely match the black locus but is closest thereto is referred to as "correlated color temperature". Generally, the correlated color temperature is expressed with a deflection (Δuv) from the blackbody locus.

The illumination control data generating portion 24 generates and outputs to the illuminating device 27 the RGB data corresponding to the control data (intensity and color temperature) from the CPU 23. This enables the optimum audio-visual environment illumination control according to the scene situations of displayed image.

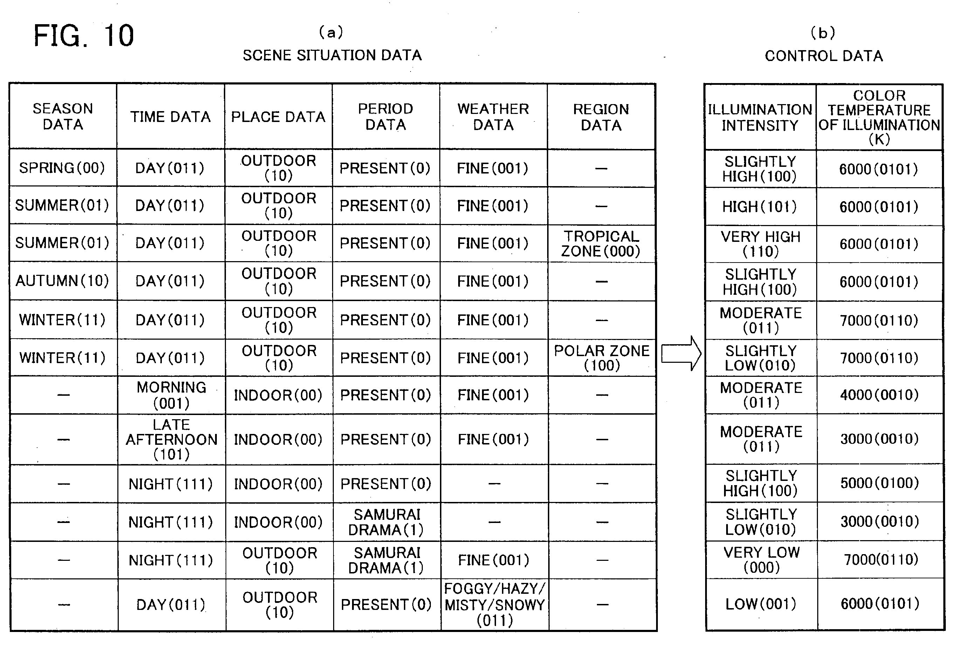

Specific examples of the illumination control depending on the scene situation data will hereinafter be described with reference to Fig. 10. For example, if the scene situation data include the season data of spring, the time data of daytime, the place data of outdoor, and the weather data of fine weather, the control data are generated to indicate that the illumination intensity is slightly high and that the illumination color temperature is 6000 K (indicated by a point (d) of Fig. 9) for reproducing the natural light on this condition. If the season data turns to summer, the control data are generated to indicate that the illumination intensity is high while maintaining an illumination color temperature of 6000 K.

If the region data indicates the tropical zone, the control data are generated to indicate that the illumination intensity is very high. If the season data turns to autumn, the control data are generated to indicate that the illumination intensity is slightly high, and if the season data turns to winter, the control data are generated to indicate that the illumination intensity is moderate and that the illumination color temperature is 7000 K (indicated by a point (e) of Fig. 9). If the region data indicates the polar zone, the control data are generated to indicate that the illumination intensity is slightly low. If the region data indicates the polar zone, the control data are generated to indicate that the illumination intensity is slightly low and that the illumination color temperature is 7000 K (indicated by the point (e) of Fig. 9).

If the scene situation data include the time data of morning, the place data of indoor, and the weather data of fine weather, the control data are generated to indicate that the illumination intensity is moderate and that the illumination color temperature is 4000 K (indicated by a point (b) of Fig. 9) for reproducing the situation that the natural light comes into the room. If the time data turns to evening, the control data are generated to indicate that the illumination color temperature is 3000 K while maintaining the moderate illumination intensity (indicated by a point (a) of Fig. 9). If the time data turns to night, the control data are generated to indicate that the illumination intensity is slightly high and that the illumination color temperature is 5000 K (indicated by a point (c) of Fig. 9) for reproducing the illumination light of a fluorescent lamp (daylight white color) that is an indoor illuminating device.

If the scene situation data include the time data of night, the place data of indoor, and the period data of samurai dramas, the illumination light source is likely to be flame of a candle, and the control data are generated to indicate that the illumination intensity is slightly low and that the illumination color temperature is 3000 K (indicated by a point (a) of Fig. 9) for reproducing this situation. If the place data turns to outdoors, the illumination light source is likely to be moonlight, and the control data are generated to indicate that the illumination intensity is very low and that the illumination color temperature is 7000 K (indicated by the point (e) of Fig. 9) for reproducing the atmosphere of moonlight night in samurai dramas.

If the scene situation data include the time data of daytime, the place data of outdoor, and the weather data of foggy, hazy, misty, snowy, the control data are generated to indicate that the illumination intensity is low and that the illumination color temperature is 6000 K (indicated by the point (d) of Fig. 9) for reproducing the natural light on this condition.

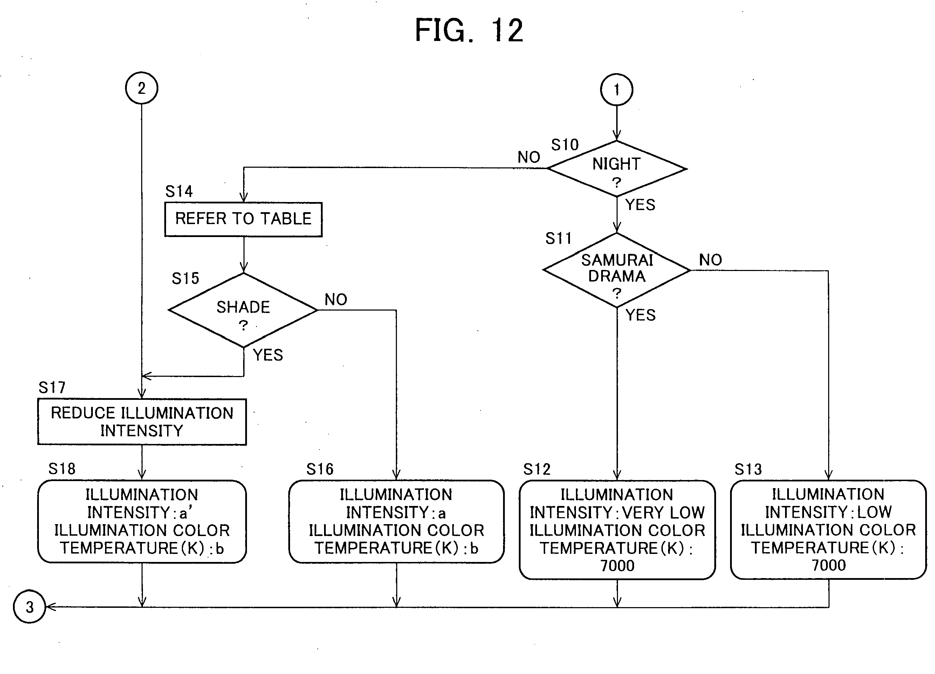

An example of a processing flow for generating the control data as above will be described with reference to Fig. 11 and Fig. 12. It is first determined whether a new scene section starts (step S1), and if the new scene starts, the scene situation data according to the scene are acquired (step S2). If the scene situation data include the place data indicating a studio (step S3), since the illumination light in a studio is not affected by day and night, weathers, etc., the control data are output to indicate that the intensity is high and that the illumination color temperature is 6000 K regardless of other pieces of data (step S4).

If the place data indicates indoors (step S5), it is determined whether the time data indicates night (step S6). If the time data indicates night and the period data indicates a samurai drama (step S7), since the illumination light source is likely to be flame of a candle, the control data are output to indicate that the illumination intensity is slightly low and that the illumination color temperature is 3000 K (step S8). If the time data indicates night and the period data indicates present day (step S7), since the illumination light source is likely to be a fluorescent lamp (daylight white color) that is a common indoor illuminating device, the control data are output to indicate that the illumination intensity is slightly high and that the illumination color temperature is 5000 K (step S9).

If it is determined that the place is not indoor at step S5, it is determined whether the time data indicates night (step S10). If the time data indicates night and the period data indicates a samurai drama (step S11), the control data are output to indicate that the illumination intensity is very low and that the illumination color temperature is 7000 K (step S12). If the time data indicates night and the period data indicates the present day (step S11), the control data are output to indicate that the illumination intensity is low and that the illumination color temperature is 7000 K (step S13). This is because the outside is relatively bright even at nighttime in the present day due to development of illuminating devices.

If it is determined that it is not a night at step S10, a lookup table prepared in advance (not shown) is referred to in order to acquire the control data indicating that the illumination intensity is "a" and the illumination color temperature is bK, which are specified from a combination of the season data, the time data, the weather data, and the region data (step S14). If the place is not in the shade (step S15), the control data acquired with reference to the lookup table are directly output (step S16). If the place is in the shade (step S15) or if it is determined that the time is not at night at step S6, the illumination intensity "a" of the control data acquired with reference to the lookup table is reduced only by two stages (levels) (step S17) to output the control data indicating that the illumination intensity is a' and the illumination color temperature is bK (step S18). For example, if the illumination intensity a of the control data acquired with reference to the lookup table is moderate (011), the illumination intensity a' of the output control data is low (001).

That is, the lookup table has the control data of combinations (960 ways) of the season data (four types), the time data (eight types), the weather data (six types), and the region data (five types) stored for the case of outdoor places. The shade and the natural light coming into the room are regarded as the intensity of the outdoor natural light is reduced and the control data is generated with the use of the control data acquired from the lookup table.

It is further determined whether broadcasting data are terminated (step S19), and if the broadcasting data are not terminated, the procedure goes back to step S1 to determine whether the next scene section has started. That is, the control data generated as above are retained and output until the next scene section starts or the broadcasting data are terminated. The above processing flow is an example for generating the control data and does not limit the scope of the present invention.

As above, in this embodiment, the illumination intensity and the illumination color temperature are obtained from various data contents input as the scene situation data along with image data to appropriately reproduce the setting situations (atmospheres) in stories of scenes, and the illumination light of the illuminating device 27 may be controlled with the corresponding RGB data. Therefore, audio-visual environment illumination that gives a view a natural and pleasant feeling may be realized without being affected by image contents, and the feeling of being at a live performance may be improved.

Since the scene situation data related to the setting situations in stories of scenes are transmitted and received in this embodiment, the scene situation data may be used to realize various functions other than the control of the audio-visual environment illumination, such as searching and editing desired scenes.

In the first embodiment of the present invention, description is made on a case where audio-visual environment illumination is controlled using only the scene situation data contained in broadcasting data. To achieve more proper control over audio-visual environment illumination, however, audio-visual environment illumination may be controlled also using image data and/or audio data in addition to scene situation data. This case will be described as a second embodiment of the present invention.

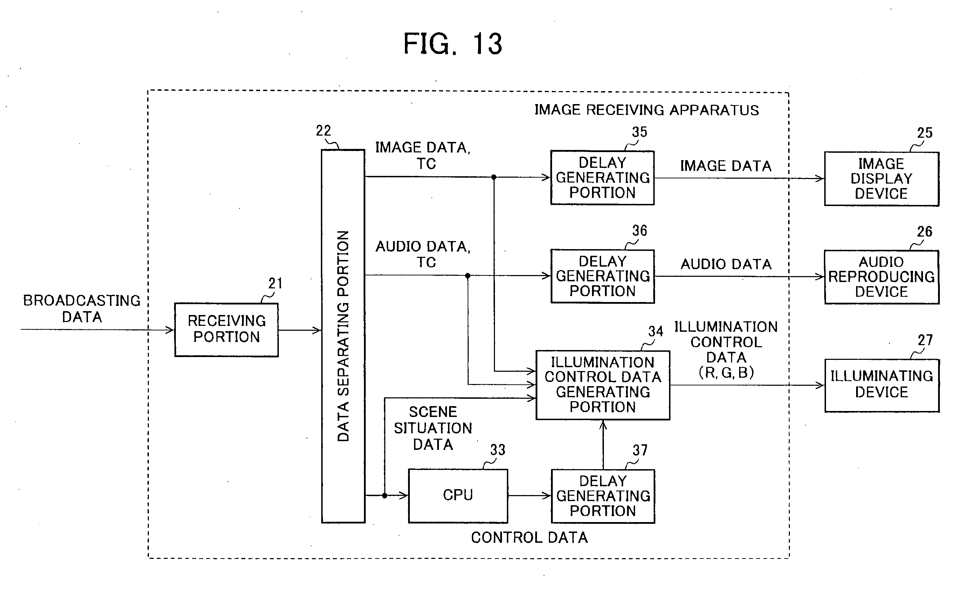

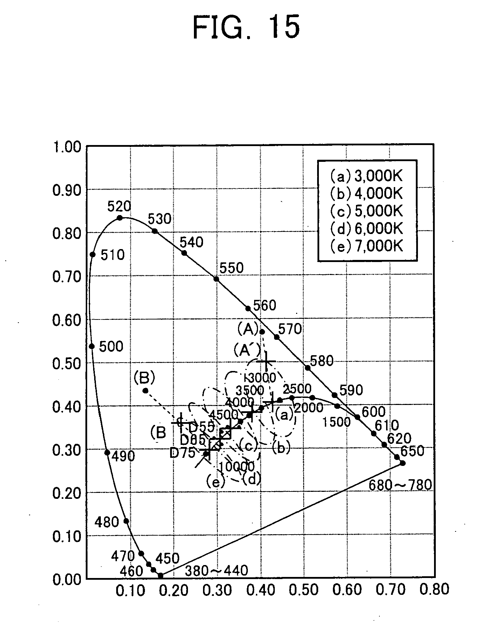

The second embodiment of the audio-visual environment control system of the present invention will hereinafter be described in detail with reference to Fig. 13 and Fig. 15, and portions performing the same operations as those of the first embodiment are given the same reference numerals and will not be described.

An image transmitting device (data transmission device) of this embodiment is the same as that of the first embodiment described in Fig. 3 and will not be described here.

Fig. 13 is a view of an schematic configuration for describing an example of an image receiving apparatus (data receiving apparatus) in the embodiment of the present invention, which includes the receiving portion 21 that receives, demodulates broadcasting data input from a transmission channel and correct errors; the data separating portion 22 that separates/extracts the image data and TC (time code) output to the image display device 25, the audio data and TC (time code) output to the audio reproducing device 26, and the scene situation data as additional data, respectively, from the output data of the receiving portion 21; a CPU 33 that receives scene situation data separated at the data separating portion 22 and outputs control data for illumination adapted to scene settings (atmosphere) of each of scenes making up the image data; an illumination control data generating portion 34 that outputs illumination control data (RGB data) corresponding to control data from the CPU 33 to the illuminating devices 27 that illuminate an audio-visual environment space; and delay generating portions 35, 36, and 37 that output image data, audio data, and control data in a delay equal to a processing time spent at the illumination control data generating portion 34.

Based on scene situation data, the CPU 33 of the present embodiment determines the intensity and color temperature (a point on the black locus) of illuminating light for each illuminating device ID, determines data indicating a given color range including the color temperature (function that represents a range indicated by a single-dot-dash line on the xy chromaticity graph of Fig. 15), and outputs the determined data as control data. The illumination control data generating portion 34 then corrects a situation (atmosphere) estimation result that is obtained based on image data and audio data to place the scene estimation result within the color range that is determined based on the scene situation data, and outputs illumination control data (RGB).

A time code (TC) is additional data that indicates respective reproduction times of image and audio data, and is, for example, composed of data indicating hours, minutes, seconds, and frames of image data.

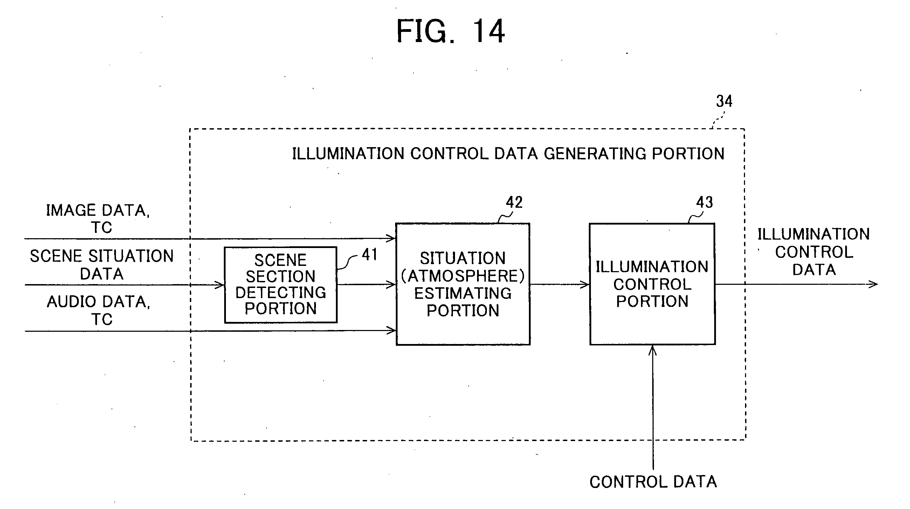

As shown in Fig. 14, the illumination control data generating portion 34 of the present embodiment has a scene section detecting portion 41 that detects the starting point TC and the ending point TC of a scene section based on scene situation data, a situation (atmosphere) estimating portion 42 that estimates the illumination condition and scene situation (atmosphere) of a shooting scene based on image data and audio data output for a given time from the starting point TC of the scene section, and an illumination control portion 43 that outputs illumination control data for controlling the illuminating devices 27 based on an estimation result from the situation (atmosphere) estimating portion 42 and control data output from the CPU 33.

Various techniques including known one may be used as an estimating method for estimating an ambient light condition at the time of shooting by the situation (atmosphere) estimating portion 42. In this embodiment, the characteristic quantity of audio data is used in addition to the characteristic quantity of image data for estimation of the situation (atmosphere) of each scene. This is for an improvement in the precision of situation (atmosphere) estimation, and the situation (atmosphere) of a shooting scene may be estimated from the characteristic quantity of image data only.

In determining the characteristic quantity of image data, for example, color signals and luminance signals in a given area on a screen may be directly used as the characteristic quantity of image data in the same manner as described in the above conventional example, or the color temperature of ambient light at the time of shooting may be determined from these color signals and luminance signals to be used as the characteristic quantity. These color and luminance signals and color temperature may be output in a switching manner as the characteristic quantity of image data. The volume, audio frequency, etc., may be used as the characteristic quantity of audio data.

The situation (atmosphere) estimating portion 42 estimates the color and brightness of ambient light at the time of shooting based on the characteristic quantity of image data and audio data. If the estimated color of ambient light is out of a given color range derived from scene situation data, the illumination control portion 43 corrects the ambient light color to be able to obtain illumination control data adapted to scene setting situations in the story of each scene.

For example, when the result of estimation of the color of ambient light by the situation (atmosphere) estimating portion 42 is represented by a point (A) on the xy chromaticity graph of Fig. 15 and an illumination color temperature indicated by control data output from the CPU 33 is represented by a point (a) on the xy chromaticity graph of Fig. 15, the illumination control portion 43 finds an intersection (A') between the straight line connecting the point (A) to the point (a) on the xy chromaticity graph and a function indicating a color range whose center is the point (a) (function that represents an ellipse indicated by a single-dot-dash line on an xy chromaticity graph of Fig. 15), and determines a color indicated by the intersection (A') to be the color of audio-visual environment illuminating light.

Likewise, when the result of estimation of the color of ambient light by the situation (atmosphere) estimating portion 42 is represented by a point (B) on the xy chromaticity graph of Fig. 15 and an illumination color temperature indicated by control data output from the CPU 33 is represented by a point (e) on the xy chromaticity graph of Fig. 15, the illumination control portion 43 finds an intersection (B') between the straight line connecting the point (B) to the point (e) on the xy chromaticity graph and a function indicating a color range whose center is the point (e) (function that represents an ellipse indicated by a single-dot-dash line on the xy chromaticity graph of Fig. 15), and determines a color indicated by the intersection (B') to be the color of audio-visual environment illuminating light.

The result of estimation of the brightness of ambient light by the situation (atmosphere) estimating portion 42 is properly corrected in correspondence to illumination intensity indicated by control data output from the CPU 33. When the result of estimation of ambient light by the situation (atmosphere) estimating portion 42 is within a given illumination range determined from scene situation data, the result of estimation of ambient light by the situation (atmosphere) estimating portion 42 is output as it is to the illuminating devices 27 as illumination control data.

In the above case, illumination control data to be output to the illuminating devices 27 is obtained from an intersection on the xy chromaticity graph between a straight line connecting an estimation result by the situation (atmosphere) estimating portion 42 to an illumination color temperature indicated by control data output from the CPU 33 and a function representing a color range indicated by control data output from CPU 33. A method of obtaining illumination control data is not limited to this one. For example, illumination control data may be obtained on the xy chromaticity graph, from a point within a given color range from which point the distance to an estimation result by the situation (atmosphere) estimating portion 42 is the minimum, or from a point within the given color range at which point a color difference ΔE between the point and the estimation result by the situation (atmosphere) estimating portion 42 is the minimum.

The average or weighted average of an estimation result by the situation (atmosphere) estimating portion 42 and an illumination color temperature and illumination intensity indicated by control data output from the CPU 33 may simply be determined to be illumination control data to be output to the illuminating devices 27. The above illumination control data is, of course, generated for each illuminating device ID.

As described above, in the present embodiment, audio-visual environment illumination is controlled using scene situation data, image data, and/or audio data. This enables more precise estimation of an illumination environment even in estimation of an illumination environment that is difficult to estimate from scene situation data only, by using a situation (atmosphere) estimation result based on the characteristic quantity of image data and/or audio data, thus enables more proper illumination control. The present embodiment also suppresses execution of illumination control hampering the feeling of being at a live performance or atmosphere that is caused by an erroneous estimation of a situation (atmosphere) based on the characteristic quantity of image data and/or audio data, and thus, constantly offers an optimum audio-visual environment.

In the present embodiment, data indicating a given color range including the color temperature of illuminating light (function representing a range indicated by a single-dot-dash line on the xy chromaticity graph of Fig. 15) is determined based on scene situation data. The size of the given color range may be determined variably by a user. The larger the given color range is determined, the bigger the effect is to reproduce the expanse of a screen, and the smaller the given color range is determined, the bigger the effect is to reproduce atmospheres of situations assumed by a producer. A user, therefore, may variably determine the size of the color range obtained from scene situation data, depending on which illumination effect the user attaches importance to.

Which of the effect of reproducing the expanse of the screen and the effect of reproducing the atmospheres of situations assumed by a producer is preferable varies depending on image contents displayed by the image display device 25. The size of the given color range obtained from scene situation data, therefore, may be variably determined according to the result of determination on the type (e. g., genre) of the image contents.

According to the present embodiment, the scene section detecting portion 41 that detects a scene section based on scene situation data is provided to control illumination control data in data switchover on a scene-to-scene basis. This prevents the feeling of being at a live performance from being spoiled due to a violent change of audio-visual environment illumination in the same scene.

In the above first and second embodiments, description is made on the case where scene situation data is multiplexed and added to broadcasting data to be transmitted. When scene situation data is not added to broadcasting data, transmitting/receiving scene situation data corresponding to displayed image data to/from an external server, etc., enables achievement of an optimum audio-visual environment corresponding to scene situation of an image. This case will then be described.

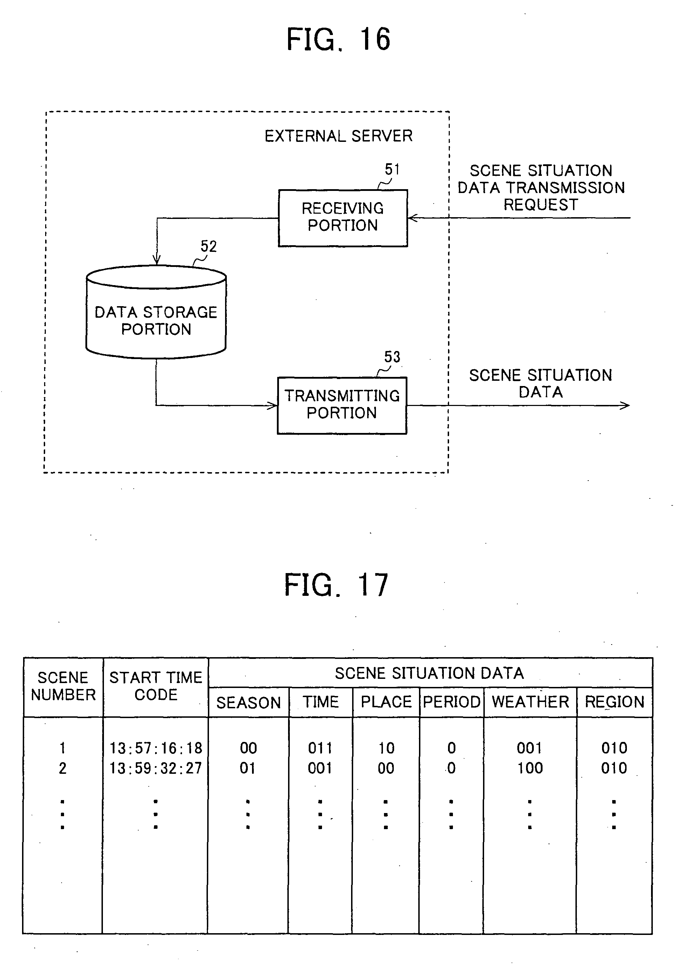

A third embodiment of the audio-visual environment control system of the present invention will hereinafter be described in detail with reference to Fig. 16 to Fig. 18, and the same portions as those in the first embodiment are given the same reference numerals and will not be described.

Fig. 16 is a block diagram of a schematic configuration of the essential parts of an external server in the audio-visual environment control system of this embodiment and, as shown in Fig. 16, the external server (data transmission device) of this embodiment includes a receiving portion 51 that receives a transmission request for the scene situation data related to certain image data (contents) from the image receiving apparatus (data receiving apparatus) , a data storage portion 52 that stores the scene situation data for each of image data (contents) , and a transmitting portion 53 that transmits the requested scene situation data to the image receiving apparatus (data receiving apparatus) that issued the request.

Fig. 17 is an explanatory view of an example of a scene situation data storage table in the audio-visual environment control system of this embodiment. Scene situation data stored in the data storing portion 52 of the present embodiment are written in a table format, where scene situation data are linked to scene numbers and scene starting time codes of image scenes, as shown in Fig. 17. The transmitting portion 53 transmits requested scene situation data corresponding to specific image data (program contents) together with scene numbers and scene starting TCs (Time Codes) of scenes making up the image data, to the image receiving apparatus that issued the request.

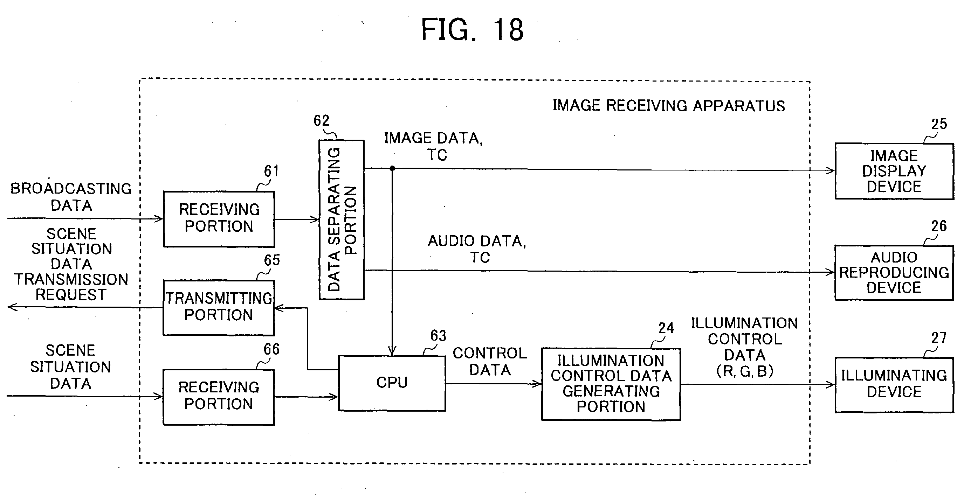

The image receiving apparatus (data receiving apparatus) will then be described that receives the scene situation data sent out from the external server device to control the audio-visual environment illumination. Fig. 18 is a block diagram of a schematic configuration of the essential parts of an image receiving apparatus in the audio-visual environment control system of this embodiment. As shown in Fig. 18, the image receiving apparatus of the present embodiment includes a receiving portion 61 that receives, demodulates input broadcasting data from a transmission path and corrects errors in the data, a data separating portion 62 that separates and extracts image data output to the image display device 25 and audio data output to the audio reproducing device 26, respectively, from output data from the receiving portion 61, a transmitting portion 65 that sends a transmission request for scene situation data corresponding to displayed image data (contents) to the external server (data transmission device) via a communication network, and a receiving portion 66 that receives the requested scene situation data sent from the external server via the communication network.

The image receiving apparatus further includes a CPU 63 that stores therein the scene situation data received by the receiving portion 66 and in synchronization with timing to display each scene of image data, outputs control data on illumination intensity and color temperature for each illuminating device ID that is obtained from scene situation data for the image scene, and the illumination control data generating portion 24 that outputs illumination control data (RGB data) corresponding to control data output from the CPU 63 to the illuminating devices 27 that illuminate an audio-visual environment space.

Specifically, the CPU 63 compares the starting time code of each scene on a scene situation data storage table which is sent from the external server and is stored inside the CPU 63, with the time code of image data to be displayed on the image display device 25, and when both time codes are identical, the CPU 63 reads out the scene situation data corresponding to the time codes, and then, based on this scene situation data, outputs control data adapted to the scene situation (atmosphere) of a display image scene.

In this manner, even when scene situation data is not added to broadcasting data, scene situation data corresponding to displayed image data (program contents) is obtained from the external server and illumination control data can be generated based on this scene situation data. In addition, timing of switchover of image scene display can be synchronized with timing of switchover of audio-visual environment illumination in a simple configuration. This enables achievement of an optimum audio-visual environment corresponding to scene situation of an image.

In the third embodiment of the present invention, description is made on the case where only the received scene situation data from the external server is used to control audio-visual environment illumination. To achieve more proper control over audio-visual environment illumination, audio-visual environment illumination may be controlled by using image data and/or audio data in addition to scene situation data. This case will then be described as a fourth embodiment of the present invention.

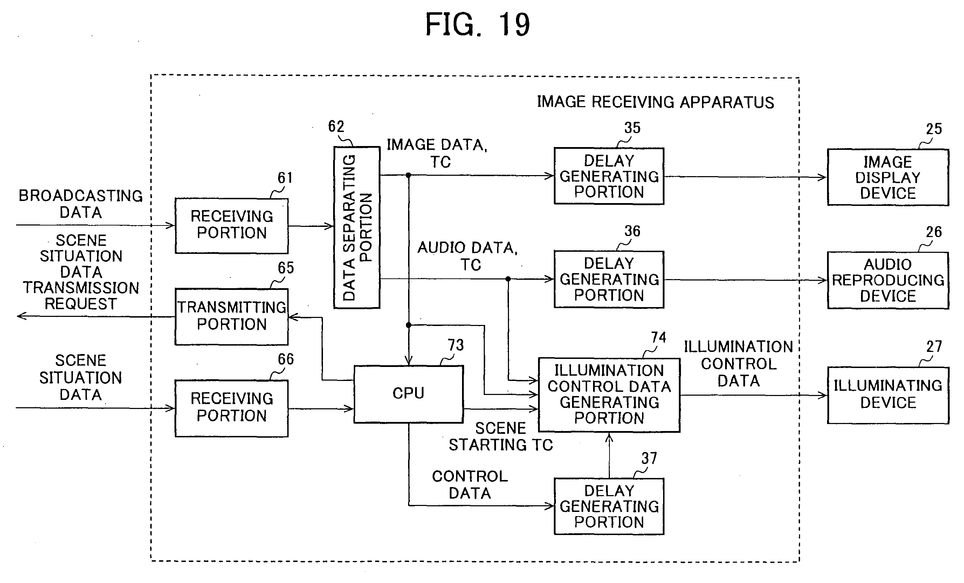

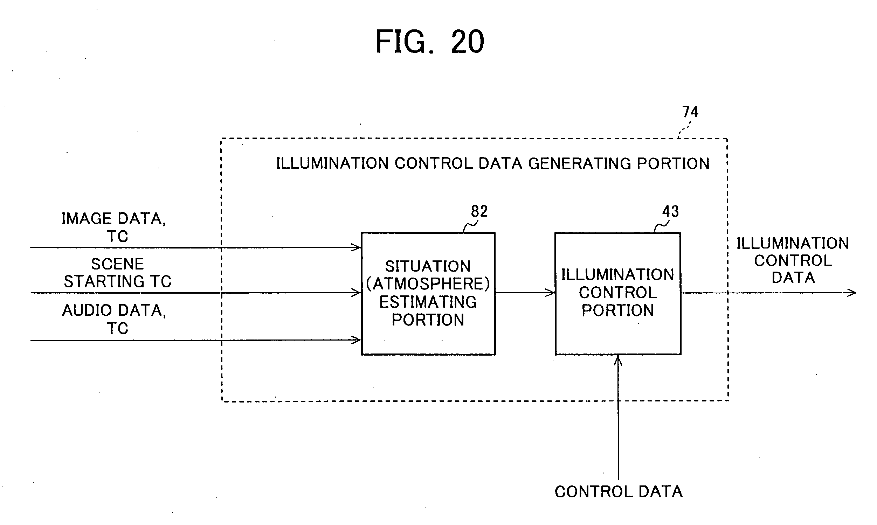

The fourth embodiment of the audio-visual environment control system of the present invention will hereinafter be described in detail with reference to Fig. 19 and Fig. 20, and the same portions as those in the second and third embodiments are given the same reference numerals and will not be described.
The external server (data transmission device) of this embodiment is the same as that of the third embodiment described in Fig. 18 and will not be described here.

Fig. 19 is a block diagram of a schematic configuration of the essential parts of an image transmitting device in the audio-visual environment control system according to this embodiment. As shown in Fig. 19, an image receiving apparatus (data receiving apparatus) of the present embodiment includes the receiving portion 61 that receives and demodulates input broadcasting data from a transmission path, a data separating portion 62 that separates and extracts image data output to the image display device 25 and audio data output to the audio reproducing device 26, from output data from the receiving portion 61, a transmitting portion 65 that sends a transmission request for scene situation data corresponding to display image data (contents) to the external server (data transmission device) via a communication network, and a receiving portion 66 that receives the requested scene situation data sent from the external server via the communication network.

The image receiving apparatus further includes a CPU 73 that stores therein scene situation data received by the receiving portion 66 and outputs control data on illumination intensity, color temperature, and color range for each illuminating device ID which are obtained from scene situation data for the image scene and a scene starting point time code in synchronization with timing to display each scene of image data, an illumination control data generating portion 74 that outputs illumination control data (RGB data) corresponding to control data output from the CPU 73 to the illuminating device 27 that illuminates an audio-visual environment space, and the delay generating portions 35, 36, and 37 that output image data, audio data, and control data with a delay equal to a processing time spent at the illumination control data generating portion 74.

The CPU 73 of the present embodiment obtains the intensity and color temperature (a point on the black track) of illuminating light based on scene situation data, determines data indicating a given color range including the color temperature (function that represents a range indicated by a single-dot-dash line on the xy chromaticity graph of Fig. 15), and outputs the illuminating light intensity, color temperature, and color range data as control data. The illumination control data generating portion 74 then corrects a situation (atmosphere) estimation result that is obtained based on image data and audio data to be within the color range that is determined based on the scene situation data, and outputs illumination control data (RGB data).

Fig. 20 is a block diagram of the illumination control data generating portion shown in Fig. 19. As shown in Fig. 20, the illumination control data generating portion 74 of the present embodiment has a situation (atmosphere) estimating portion 82 that estimates the illumination condition and scene situation (atmosphere) of a shooting scene based on image data and audio data output for a given time from the scene starting point TC that is sent from the CPU 73, and the illumination control portion 43 that outputs illumination control data for controlling the illuminating devices 27, based on an estimation result from the situation (atmosphere) estimating portion 82 and control data output from the CPU 73.

The situation (atmosphere) estimating portion 82 estimates the color and brightness of ambient light at the time of shooting based on the characteristic quantity of image data and audio data. If the estimated color of ambient light is out of a given color range obtained from scene situation data, the illumination control portion 43 corrects the ambient light color to be able to obtain illumination control data appropriate to the scene setting situations in the story of each scene.

As described above, in the present embodiment, even when scene situation data is not added to broadcasting data, scene situation data corresponding to displayed image data (program contents) is obtained from the external server to control audio-visual environment illumination using this scene situation data and image data and/or audio data. This enables illumination control that takes account of the result of estimation of a situation (atmosphere) based on the characteristic quantity of image data and/or audio data in addition to scene situation data, and suppresses execution of illumination control hampering the feeling of being at a live performance or atmosphere that is caused by an erroneous estimation of a situation (atmosphere) based on the characteristic quantity of image data and/or audio data, thus constantly offers an optimum audio-visual environment.

In the present embodiment, data indicating a given color range including the color temperature of illuminating light (function representing a range indicated by a single-dot-dash line on the xy chromaticity graph of Fig. 15) is determined based on scene situation data. The size of the given color range may be determined variably by a user. The larger the given color range is determined, the bigger the effect is to reproduce the expanse of a screen, and the smaller the given color range is determined, the bigger the effect is to reproduce the atmosphere of situations assumed by a producer. The user, therefore, may variably determine the size of the color range obtained from scene situation data, depending on which of the illumination effects the user emphasizes.

Which of the effect of reproducing the expanse of the screen and the effect of reproducing the atmosphere of situations assumed by a producer is preferable varies depending on image contents displayed by the image display device 25. The size of the given color range derived from scene situation data, therefore, may be variably determined according to the result of determination on the type (e.g., genre) of the image contents.

According to the present embodiment, illumination control data is controlled in data switchover on a scene-to-scene basis based on scene starting time codes on the scene situation data storage table. This prevents the feeling of being at a live performance from being spoiled due to a violent change of audio-visual environment illumination in the same scene.

The audio-visual environment control device, audio-visual environment control method, and the audio-visual environment control system of the present invention may be realized in various embodiments without deviating from the substance of the present invention. For example, the audio-visual environment control device may be incorporated in the image display device, where the audio-visual environment control device is, of course, capable of controlling external illuminating equipment based on various data contained in input image data.

The above described scene situation data is not limited to be obtained from the external server or by separating from broadcasting data. For example, when image data reproduced by external equipment (DVD player, blu-ray disc player, etc.) is displayed, scene situation data added to a recording medium may be read out to be used.

## Claims

1. A data transmission device for transmitting image data composed of one or more scenes, wherein the scene situation data indicative of scene setting situations of each of scenes of the image data is added to the image data and transmitted.

2. The data transmission device as defined in claim 1, wherein
the scene situation data is added to the image data scene by scene.

3. The data transmission device as defined in claim 1, wherein
the scene situation data is added to the image data shot by shot.

4. The data transmission device as defined in claim 1, wherein
the scene situation data is added to the image data frame by frame.

5. The data transmission device as defined in any one of claims 1 to 4, wherein
the scene situation data at least contains data indicating seasons in stories of scenes.

6. The data transmission device as defined in any one of claims 1 to 5, wherein
the scene situation data at least contains data indicating clock times in stories of scenes.

7. The data transmission device as defined in any one of claims 1 to 6, wherein
the scene situation data at least contains data indicating places in stories of scenes.

8. The data transmission device as defined in any one of claims 1 to 7, wherein
the scene situation data at least contains data indicating periods in stories of scenes.

9. The data transmission device as defined in any one of claims 1 to 8, wherein
the scene situation data at least contains data indicating weathers in stories of scenes.

10. The data transmission device as defined in any one of claims 1 to 9, wherein
the scene situation data at least contains data indicating regions in stories of scenes.

11. A data transmission device that transmits scene situation data indicating scene setting situations of each of scenes comprising image data on the reception of a transmission request from outside, wherein the scene situation data is transmitted together with data indicating a timing of start of each of scenes comprising the image data.

12. The data transmission device as defined in claim 11, wherein
the scene situation data at least contains data indicating seasons in stories of scenes.

13. The data transmission device as defined in claim 11 or 12, wherein
the scene situation data at least contains data indicating clock times in stories of scenes.

14. The data transmission device as defined in any one of claims 11 to 13, wherein
the scene situation data at least contains data indicating places in stories of scenes.

15. The data transmission device as defined in any one of claims 11 to 14, wherein
the scene situation data at least contains data indicating periods in stories of scenes.

16. The data transmission device as defined in any one of claims 11 to 15, wherein
the scene situation data at least contains data indicating weathers in stories of scenes.

17. The data transmission device as defined in any one of claims 11 to 16, wherein
the scene situation data at least contains data indicating regions in stories of scenes.

18. An audio-visual environment control device comprising:
a receiving means that receives image data to be displayed on a display device and scene situation data indicating scene setting situations of each of scenes comprising the image data; and
a control means that controls illuminating light from an illuminating device arranged around the display device, based on the scene situation data.

19. The audio-visual environment control device as defined in claim 18, wherein
the control means controls illuminating light from the illuminating device by switching illuminating light scene by scene in the image data.

20. The audio-visual environment control device as defined in claim 18 or 19, wherein
the control means controls illuminating light from the illuminating device using also a characteristic quantity of the image data, in addition to the scene situation data.

21. The audio-visual environment control device as defined in any one of claims 18 to 20, wherein
the scene situation data at least contains data indicating seasons in stories of scenes.

22. The audio-visual environment control device as defined in any one of claims 18 to 21, wherein
the scene situation data at least contains data indicating clock times in stories of scenes.

23. The audio-visual environment control device as defined in any one of claims 18 to 22, wherein
the scene situation data at least contains data indicating places in stories of scenes.

24. The audio-visual environment control device as defined in any one of claims 18 to 23, wherein
the scene situation data at least contains data indicating periods in stories of scenes.

25. The audio-visual environment control device as defined in any one of claims 18 to 24, wherein
the scene situation data at least contains data indicating weathers in stories of scenes.

26. The audio-visual environment control device as defined in any one of claims 18 to 25, wherein
the scene situation data at least contains data indicating regions in stories of scenes.

27. An audio-visual environment control system comprising the audio-visual environment control device as defined in any one of claims 18 to 26, and an illuminating device that is controlled by the audio-visual environment control device in emission of audio-visual environment illuminating light.

28. A data transmission method for transmitting image data composed of one or more scenes, wherein scene situation data indicating scene setting situations of each of scenes of the image data is added to the image data and transmitted.

29. A data transmission method for transmitting scene situation data indicating scene setting situations of each of scenes comprising image data on the reception of a request from outside, wherein the scene situation data is transmitted together with data indicating a timing to start of each of scenes comprising the image data.

30. An audio-visual environment control method that receives image data to be displayed on a display device and scene situation data indicating scene setting situations of each of scenes comprising the image data and controls illuminating light from an illuminating device disposed around the display device based on the scene situation data.
